# EUROPEAN PATENT APPLICATION

(11) **EP 4 607 469 A1**
(43) Date of publication of application: **27.08.2025**
(21) Application number: 23879091.9
(22) Date of filing: 17.10.2023
(51) Int. Cl.: G06T 19/00, G06F 3/01

(54) **AUGMENTED DISPLAY METHOD AND APPARATUS, ELECTRONIC DEVICE, AND STORAGE MEDIUM**

(30) Priority: 21.10.2022 CN 202211297923
(71) Applicant: Great Wall Motor Company Limited, Baoding, Hebei 071000 (CN)
(72) Inventor: ZHANG, Xiaolong, Baoding, Hebei 071000 (CN); LI, Yuan, Baoding, Hebei 071000 (CN); DUAN, Yingxin, Baoding, Hebei 071000 (CN)
(74) Representative: Klunker IP Patentanwälte PartG mbB
(86) International application number: PCT/CN2023/124883
(87) International publication number: WO 2024/083102

(57) **Abstract**

Disclosed are an augmented display method and apparatus, an electronic device, and a storage medium. The method includes: collecting reality information of a target object; acquiring first target object coordinate information in a first coordinate system determined based on a preset position of a current vehicle; determining display information of the first target object coordinate information in a target display region by using a coordinate equation transformation relationship based on user eyes of the current vehicle, the target display region, and the first coordinate system; and performing augmented display. Thus, vehicle driving information and reality information collected by intelligent driving are fused, and augmented fusion display is performed in the target display region, so that a user can visually and efficiently perceive intelligent driving prompt information, thereby maximizing perception of the user on system safety.

## Description

### TECHNICAL FIELD

The present disclosure relates to the field of automotive technologies, and in particular, to an augmented display method and apparatus, an electronic device, and a storage medium.

### BACKGROUND

With advancement of intelligent driving towards autonomous driving, how to improve safety of the intelligent driving has become a focus of attention. How to maximize perception of a user on system safety while ensuring the safety and stability of the intelligent driving has become an urgent technical problem to be solved.

### SUMMARY

In view of this, the present application provides an augmented display method, apparatus, an electronic device, and a storage medium, to maximize perception of a user on system safety by fusing augmented display and reality scene of intelligent driving.

In a first aspect, the present application provides an augmented display method, including:
collecting reality information of a target object, where the reality information of the target object is intelligent driving information of a current vehicle; acquiring a first coordinate system determined based on a preset position of the current vehicle; acquiring, based on the first coordinate system and the reality information of the target object, first target object coordinate information of the target object; acquiring, based on user eyes, a target display region, and the first coordinate system of the current vehicle, a coordinate equation transformation relationship; and determining, based on the first target object coordinate information and the coordinate equation transformation relationship, display information of the target object in the target display region, and performing augmented display of the display information.

Optionally, the first coordinate system is acquired through the following method: acquiring the first coordinate system with the preset position of the current vehicle as a coordinate origin, a direction parallel to a horizontal plane and a speed direction of the current vehicle as a horizontal axis, and a direction parallel to the horizontal plane and perpendicular to the speed direction of the current vehicle as a longitudinal axis.

Optionally, the acquiring, based on user eyes, a target display region, and the first coordinate system of the current vehicle, a coordinate equation transformation relationship includes: acquiring a second coordinate system based on the user eyes of the current vehicle with the user eyes of the current vehicle as a coordinate origin of the second coordinate system, an axis parallel to the horizontal plane and the speed direction of the current vehicle as a horizontal axis of the second coordinate system, and an axis parallel to the horizontal plane and perpendicular to the speed direction of the current vehicle as a longitudinal axis of the second coordinate system; determining, based on a position relationship between the user eyes of the current vehicle and the preset position of the current vehicle, a first coordinate equation transformation relationship between the second coordinate system and the first coordinate system; and acquiring a second coordinate equation transformation relationship mapping coordinate information in the second coordinate system to the target display region; where the coordinate equation transformation relationship includes the first coordinate equation transformation relationship and the second coordinate equation transformation relationship.

Optionally, the determining, based on the first target object coordinate information and the coordinate equation transformation relationship, display information of the target object in the target display region includes: determining, based on the first target object coordinate information and the first coordinate equation transformation relationship, second target object coordinate information, where the second target object coordinate information is coordinate information of the target object in the second coordinate system; and determining, based on the second target object coordinate information and the second coordinate equation transformation relationship, the display information of the target object in the target display region.

Optionally, the target object includes lane lines collected by the current vehicle during intelligent driving, and starting and ending points of the lane lines, and the method further includes: determining, based on the lane lines and the starting and ending points, an augmented display region of the target display region, where the augmented display region is a region performing augmented display of a fusion of the lane lines and the starting and ending points; marking a plurality of mark points in the augmented display region and acquiring first coordinate information of the plurality of mark points; and determining, based on the first coordinate information of the plurality of mark points, a display position of the target object in the target display region through the coordinate equation transformation relationship, and determining an angle between the target object and the horizontal plane.

Optionally, the marking a plurality of mark points in the augmented display region includes: marking the plurality of mark points in the augmented display region through dot marking.

Optionally, after the collecting reality information of a target object, the method further includes: generating an augmented-reality virtual fusion marker of the target display region and the target object; where the performing augmented display of the display information includes: performing, based on the augmented-reality virtual fusion marker of the target object and the display information, augmented display of the display information.

In a second aspect, the present application provides an augmented display apparatus, including: a collection module, configured to collect reality information of a target object, where the reality information of the target object is intelligent driving information of a current vehicle; a first acquisition module, configured to acquire a first coordinate system determined based on a preset position of the current vehicle; a second acquisition module, configured to acquire, based on the first coordinate system and the reality information of the target object, first target object coordinate information of the target object; a third acquisition module, configured to acquire, based on user eyes, a target display region, and the first coordinate system of the current vehicle, a coordinate equation transformation relationship; and a display module, configured to determine, based on the first target object coordinate information and the coordinate equation transformation relationship, display information of the target object in the target display region, and perform augmented display of the display information.

Optionally, the first acquisition module is configured to acquire the first coordinate system with the preset position of the current vehicle as a coordinate origin, a direction parallel to a horizontal plane and a speed direction of the current vehicle as a horizontal axis, and a direction parallel to the horizontal plane and perpendicular to the speed direction of the current vehicle as a longitudinal axis.

Optionally, the third acquisition module is configured to acquire a second coordinate system based on the user eyes of the current vehicle with the user eyes of the current vehicle as a coordinate origin of the second coordinate system, an axis parallel to the horizontal plane and the speed direction of the current vehicle as a horizontal axis of the second coordinate system, and an axis parallel to the horizontal plane and perpendicular to the speed direction of the current vehicle as a longitudinal axis of the second coordinate system; determine, based on a position relationship between the user eyes of the current vehicle and the preset position of the current vehicle, a first coordinate equation transformation relationship between the second coordinate system and the first coordinate system; and acquire a second coordinate equation transformation relationship mapping coordinate information in the second coordinate system to the target display region; where the coordinate equation transformation relationship includes the first coordinate equation transformation relationship and the second coordinate equation transformation relationship.

Optionally, the display module is configured to determine, based on the first target object coordinate information and the first coordinate equation transformation relationship, second target object coordinate information, where the second target object coordinate information is coordinate information of the target object in the second coordinate system; and determine, based on the second target object coordinate information and the second coordinate equation transformation relationship, the display information of the target object in the target display region.

Optionally, the target object includes lane lines collected by the current vehicle during intelligent driving, and starting and ending points of the lane lines, and the apparatus further includes: a marking module, configured to acquire part of the target display region performing augmented display of a fusion of the lane lines, mark a plurality of mark points in the part of the target display region of the lane lines and acquire first coordinate information of the plurality of mark points; and the display module is further configured to determine, based on the first coordinate information of the plurality of mark points, a display position of the target object in the target display region through the coordinate equation transformation relationship, and determine an angle between the target object and the horizontal plane.

Optionally, after the collecting reality information of a target object, the apparatus further includes: a generation module, configured to generate an augmented-reality virtual fusion marker of the target display region and the target object, where the display module is further configured to perform, based on the augmented-reality virtual fusion marker of the target object and the display information, augmented display of the display information.

In a third aspect, the present application provides an electronic device. The electronic device includes: a memory and a processor, where the memory is coupled to the processor; and program instructions are stored in the memory, and when the program instructions are executed by the processor, any one of methods of the first aspect aforementioned is implemented by the electronic device.

In a fourth aspect, the present application provides a computer-readable storage medium, where an implementation program of an augmented display method is stored for implementing any one of the methods of the first aspect aforementioned when the implementation program is executed by a processor.

According to the present application, in a process of augmented display, vehicle driving information and reality information collected by intelligent driving are fused, so that a user can visually and efficiently perceive intelligent driving prompt information, thereby maximizing perception of the user on system safety.

### BRIEF DESCRIPTION OF THE DRAWINGS

FIG. 1 is a schematic diagram of an application scenario of an augmented display method and apparatus provided by an embodiment of the present application.
FIG. 2 is a flowchart of an augmented display method provided by an embodiment of the present application.
FIG. 3 is a schematic diagram of a coordinate equation transformation relationship provided by an embodiment of the present application.
FIG. 4 is a flowchart of an augmented display method applied to lane line display provided by an embodiment of the present application.
FIG. 5 shows a lane line coordinate information provided by an embodiment of the present application.
FIG. 6 shows dot marking display of a straight lane line provided by an embodiment of the present application.
FIG. 7 is a schematic diagram of an augmented display of straight lane markings provided by an embodiment of the present application.
FIG. 8 shows display of dot marking of a curved lane line provided by an embodiment of the present application.
FIG. 9 is a schematic diagram of an augmented display of curved lane markings provided by an embodiment of the present application.
FIG. 10 is a flowchart of an augmented display method applied to lane line display and target vehicle display provided by an embodiment of the present application.
FIG. 11 is a schematic diagram of a fusion augmented display of lane line coordinate information and target vehicle information provided by an embodiment of the present application.
FIG. 12 is a schematic diagram of a structure of an augmented display apparatus provided by an embodiment of the present application.

### DETAILED DESCRIPTION OF THE EMBODIMENTS

As mentioned earlier, how to maximize user perception of system safety while ensuring safety and stability of intelligent driving has become an urgent technical problem to be solved. Based on this, the present application proposes to fuse augmented display and reality information of intelligent driving and display the reality information of intelligent driving on an augmented display device, so that a user can visually and efficiently perceive intelligent driving prompt information, thereby maximizing perception of the user on system safety.

In the present application, intelligent driving refers to technology of recognizing, perceiving, and processing environmental information (such as surrounding vehicles, pedestrians, and lane lines) around a vehicle through various sensors such as radar, LiDAR, cameras, etc. Intelligent driving information refers to information obtained through these technologies.

The augmented display device in the technical solution of the present application may be an Augmented Reality Head Up Display (AR-HUD). AR-HUD is a display device configured to project vehicle driving information onto a windshield and combine it with a real environment, allowing front row users to see a driving situation of the vehicle without having to lower their heads while driving.

In order to enable those skilled in the art to better understand an augmented display method in the present application, a clear and complete description of the technical solution in the embodiments of the present application will be provided with reference with the accompanying drawings in the following. Obviously, the described embodiments are only a part of the embodiments of the present application, not all of them. Based on the embodiments in the present application, all other embodiments obtained by those skilled in the art without creative effort shall fall within the scope of protection of the present application.

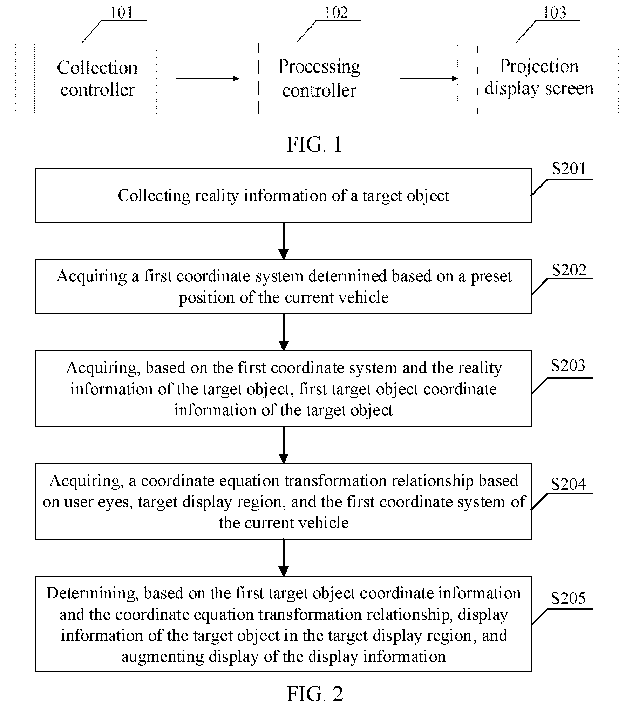

Firstly, in order to enable those skilled in the art to better understand the present application, the present application provides a schematic diagram of an application scenario of an augmented display method and apparatus. Referring to FIG. 1, FIG. 1 is the schematic diagram of the application scenario of an augmented display method and apparatus provided by an embodiment of the present application.

In the application scenarios of the present embodiment, a collection controller 101, a processing controller 102, and a projection display screen 103 are provided. The collection controller 101 is used to collect reality information of the target object.

In the present embodiment, one or more collection controllers 101 may be provided, and a quantity of the collection controller 101 is not limited in the present application. The collection controller 101 may be an intelligent driving controlling controller, which is used to collect reality information of a target object. The reality information of the target object is intelligent driving information of a current vehicle. The collection controller 101 may also be other collection controllers used for receiving video and radar information.

In the embodiment of the present application, the processing controller 102 may be an AR-HUD controller or other controllers such as a central control domain controller. The processing controller 102 is used to process the reality information of the target object collected by the collection controller 101, and convert the reality information into projection information through processing. Th projection information may be displayed on the projection display screen 103 through augmented display. The processing controller 102 is not limited in the present application.

In the present embodiment, the projection display screen 103 is used to perform augmented display to the projection information obtained by the processing controller 102. That is, the projection information obtained by the processing controller 102 and the augmented display AR are fused by the processing controller 102 to obtain augmented information, which is displayed on the projection display screen 103. In the present embodiment, the projection display screen 103 may be an AR-HUD projection display screen, as well as a physical display screen and virtual reality medium.

A detailed description of the technical solution of the present application will be provided in the following.

Referring to FIG. 2, FIG. 2 is a flowchart of an augmented display method provided by an embodiment of the present application, which is applied in the application scenario diagram of FIG. 1. The method at least include the following procedures.

S201: collecting reality information of a target object.

The target object is a product that may affect safety of a current vehicle, such as a target vehicle, a target person, and a target lane line. The reality information of the target object is intelligent driving information of a current vehicle. In the embodiment of the present application, the reality information of the target object may include information such as a size and a position of the target object.

In the embodiment of the present application, the collection controller 101 may be used to collect reality information of the target object and send it to the processing controller 102 for processing.

S202: acquiring a first coordinate system determined based on a preset position of the current vehicle.

In the present embodiment, the first coordinate system is a horizontal coordinate system based on the preset position of the current vehicle as an origin point. The first coordinate system is used to represent a relationship between target object and the preset position of the current vehicle, in order to facilitate subsequent processing.

In one possible implementation, the first coordinate system may be based on the preset position of the current vehicle as a coordinate origin point, with a horizontal axis (x-axis) parallel to a horizontal plane and a speed direction of the current vehicle, and a longitudinal axis (y-axis) parallel to the horizontal plane and perpendicular to the speed direction of the current vehicle. Therein, the preset position of the current vehicle may be a front position of the vehicle.

S203: acquiring, based on the first coordinate system and the reality information of the target object, first target object coordinate information of the target object.

The first target object coordinate information is coordinates of the reality information of the target object displayed in the first coordinate system. In one possible implementation, the first target object coordinate information may be acquired based on a distance from the target object to the preset position of the current vehicle, as well as an angle between the target object and a driving direction of the preset position of the current vehicle.

Exemplarily, it is assumed that the distance from the target object to the preset position of the current vehicle is S, and the angle between the target object and the driving direction of the preset position of the current vehicle is α. The first coordinate system is based on the preset position of the current vehicle as the coordinate origin, with the direction parallel to the horizontal plane and the speed direction of the current vehicle as the horizontal axis (x-axis), and with the direction parallel to the horizontal plane and perpendicular to the speed direction of the current vehicle as the longitudinal axis (y-axis). Thus, the first target object coordinate information of the target object is (Ssin α, Scos α).

S204: acquiring, based on user eyes, a target display region, and the first coordinate system of the current vehicle, a coordinate equation transformation relationship.

In the embodiment of the present application, the coordinate equation transformation relationship refers to a transformation relationship between coordinates, and is used to transform the first target object coordinate information into display information of the target display region. The augmented display takes user eyes as a visual starting point for imaging display. Therefore, in the embodiment of the present application, the coordinate equation transformation relationship is based on the user eyes, the target display region, and the first coordinate system of the current vehicle.

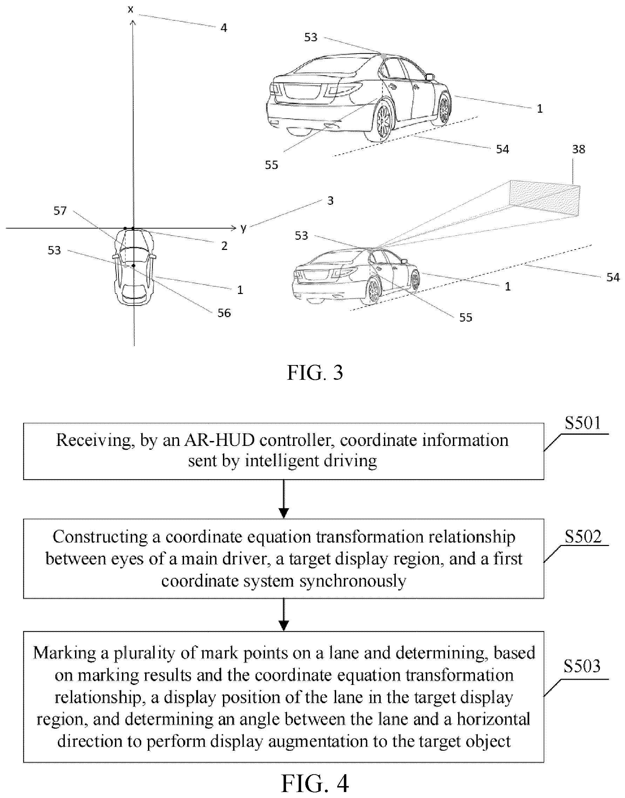

In one possible implementation, the coordinate equation transformation relationship includes a first coordinate equation transformation relationship from the first coordinate system to a second coordinate system, and a second coordinate equation transformation relationship mapping coordinate information of the second coordinate system to the target display region. It may be referred to in FIG. 3 for a specific implementation of the schematic diagram of the coordinate equation transformation relationship, which will not be discussed here.

S205: determining, based on the first target object coordinate information and the coordinate equation transformation relationship, display information of the target object in the target display region, and performing augmented display of the display information.

Based on the first target object coordinate information and the coordinate equation transformation relationship, the display information of the target object in the target display region may be determined. In one possible implementation, step S205 may include the following steps.

Second target object coordinate information may be determined based on the first target object coordinate information and the first coordinate equation transformation relationship. Therein, the second target object coordinate information is coordinate information of the target object in the second coordinate system.

Based on the second target object coordinate information and the second coordinate equation transformation relationship, the display information of the target object in the target display region may be determined. In one possible implementation, the display information may be combined with AR virtual markers to perform augmented display of the target object. In the embodiment of the present application, the augmented display of the target object may include a coverage range, lane information, the target object, and the AR virtual marker display of the target object on a projection display screen.

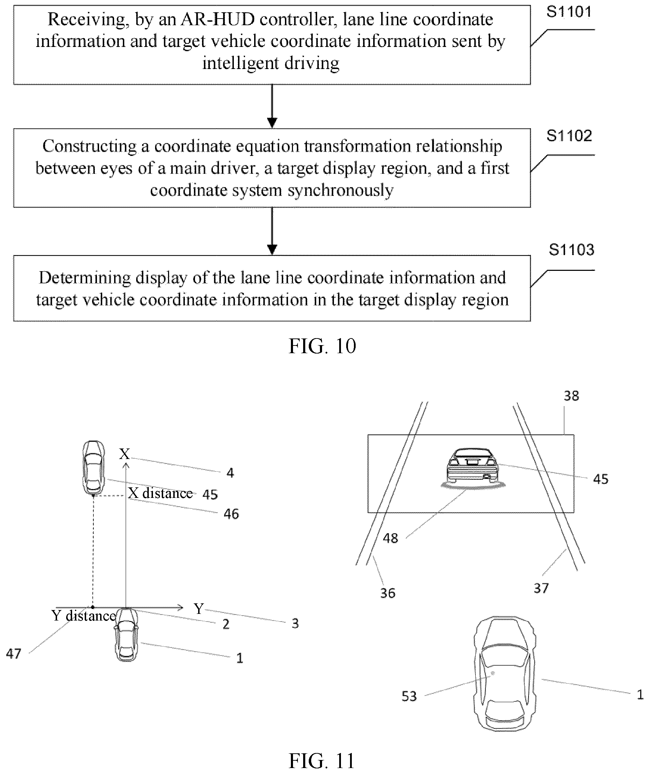

Exemplarily, as shown in FIG. 11, FIG. 11 is a schematic diagram of augmented display provided by an embodiment of the present application. The target object in this embodiment is a target vehicle 45. Specific display content may include display of an AR virtual marker 48 of the target vehicle 45 on the projection display screen 38. The specific display content may also includes a coverage range, a left straight lane line 36, and a right straight lane line 37.

Referring to FIG. 3, FIG. 3 is a schematic diagram of a coordinate equation transformation relationship provided by an embodiment of the present application. Step S204 may include following step.

The first coordinate system takes the front 2 of the current vehicle 1 as a coordinate origin point, with a direction parallel to a horizontal plane and a speed direction of the current vehicle as an x-axis 4, and a direction parallel to the horizontal plane and perpendicular to the speed direction of the current vehicle as a y-axis 3.

A second coordinate system is a coordinate system based on user eyes of the current vehicle as a reference. The second coordinate system takes the user eyes of the current vehicle as a coordinate origin point, with the direction parallel to the horizontal plane and the speed direction of the current vehicle as an x-axis (horizontal axis), and the direction parallel parallel to the horizontal plane and perpendicular to the speed direction of the current vehicle as a y-axis (longitudinal axis), and a direction perpendicular to the horizontal plane as a z-axis (vertical axis). The coordinates of the second coordinate system are represented as (x2, y2, z). Specifically, the user eyes of the current vehicle are eyes of a main driver 53. Therein, a Y-axis coordinate of the eyes of the main driver 53 in the first coordinate system is coordinate 56, and an X-axis coordinate of the eyes of the main driver 53 in the first coordinate system is coordinate 57. A height of the eyes of the main driver 53 from the ground is height 55.

Based on a position relationship between the user eyes of the current vehicle and the preset position of the current vehicle, the first coordinate equation transformation relationship between the second coordinate system and the first coordinate system may be determined. For example, assuming that the first coordinate system is presented in (x1, y1) and a coordinate origin point of the first coordinate system is a front of a vehicle (0,0), when coordinates of the user eyes of the current vehicle in the first coordinate system is (m, n), then the first coordinate equation transformation relationship between the second coordinate system and the first coordinate system is: x2 = x1+m, y2 = y1+m. Therein, z is a distance from the user eyes to the horizontal plane.

A second coordinate equation transformation relationship mapping coordinate information in the second coordinate system to the target display region is acquired. Exemplarily, the second coordinate equation transformation relationship mapping coordinate information in the second coordinate system to the target display region may be determined based on a position relationship between the eyes of the main driver 53 and the projection display screen 38 of the current vehicle.

The present application discloses an augmented display method. Firstly, reality information of a target object is collected. Then first target object coordinate information is acquired. The first target object coordinate information is coordinate information of the target object in the first coordinate system. The first coordinate system is determined based on a preset position of a current vehicle. Display information of the first target object coordinate information in the target display region may be determined by utilizing a coordinate equation transformation relationship between user eyes, the target display region, and the first coordinate system of the current vehicle. Finally, augmented display is performed to the display information of the target display region. Thus, vehicle driving information and reality information collected by intelligent driving are fused, and augmented fusion display is performed in the target display region, so that a user can visually and efficiently perceive intelligent driving prompt information, thereby maximizing perception of the user on system safety.

Referring to FIG. 4, FIG. 4 is a flowchart of an augmented display method applied to lane line display provided by an embodiment of the present application. The method includes the following steps:

S501: receiving, by an AR-HUD controller, coordinate information sent by intelligent driving.

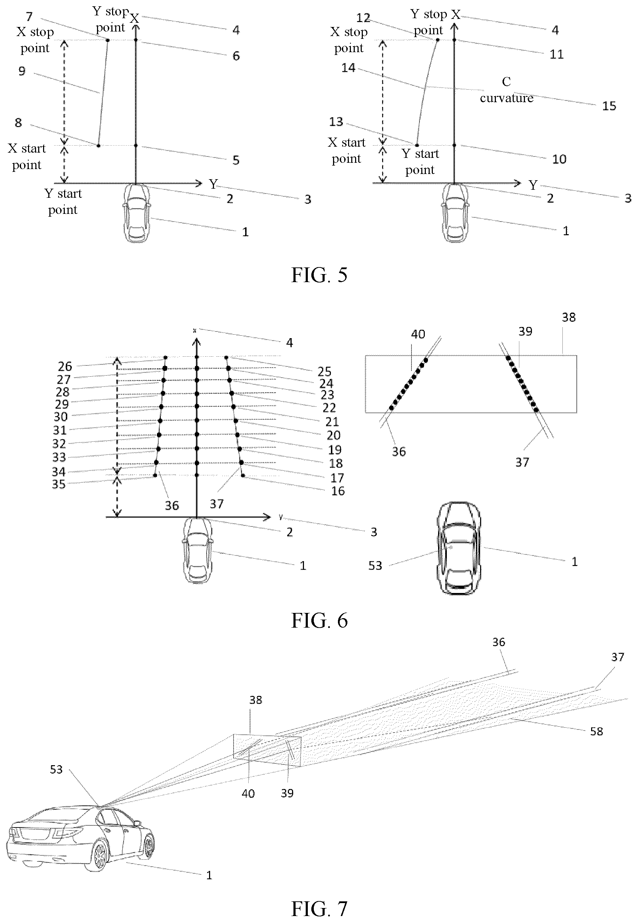

In the embodiment of the present application, the coordinate system sent by the intelligent driving is coordinate information of a lane line in the first coordinate system. The first coordinate system is the coordinate system shown in FIG. 3. As shown in FIG. 5, FIG. 5 shows a lane line coordinate information provided by an embodiment of the present application. There are two types of lane lines including a straight lane line 9 and curved lane line 14.

Therein, the coordinate information of the straight lane line 9 on the left side of FIG. 5 includes an x-coordinate 5 of a starting point, an x-coordinate 6 of an ending point, a y-coordinate 7 of the ending point, and a y-coordinate 8 of the starting point. The coordinate information of the curved lane line 14 on the right side of FIG. 5 includes an x-coordinate 10 of a starting point, an x-coordinate 11 of an ending point, a y-coordinate 12 of the ending point, and a y-coordinate 13 of the starting point.

S502: constructing a coordinate equation transformation relationship between eyes of a main driver, a target display region, and a first coordinate system synchronously.

Specific construction steps are shown in FIG. 3, which will not be repeated herein again.

S503: marking a plurality of mark points on lane lines and determining, based on marking results and the coordinate equation transformation relationship, a display position of the lane lines in the target display region, and determining an angle between the lane lines and a horizontal direction to perform augmented display of the target object.

An augmented display region of the target display region may be determined based on x and y coordinates corresponding to actual lane lines and starting and ending points of the lane lines. The augmented display region refers to a region used for performing augmented display of fused lane lines, and the starting and ending points of the lane lines. Exemplarily, 10 points are marked on each of the left and right lane lines. Based on the coordinate information of each point in the first coordinate system and the coordinate equation transformation relationship as shown in FIG. 3, the display position of the lane lines in the target display region may be determined, and the angle between the lane lines and the horizontal direction is determined. Then, augmented dfisplay is performed.

Referring to FIG. 6, FIG. 6 shows dot marking display of a straight lane line provided by an embodiment of the present application. Therein, points 16-25 are 10 sampling points of a left straight lane line 37, and points 26-35 are 10 sampling points of a right straight lane line 36. Based on the coordinate equation transformation relationship and the straight line of the lane line, a left AR virtual marked straight lane line 40 displayed on the projection display screen 38 as the left straight lane line 37 may be determined, and a right AR virtual marked straight lane line 39 displayed on the projection display screen 38 as the right straight lane line 36 may be determined. Specific display results may be referred to FIG. 7, which is a schematic diagram of an augmented display of straight lane markings provided by an embodiment of the present application. A coverage range of 58, the left straight lane line 37 and the right straight lane line 36 of the straight lane line are displayed on the projection display screen 38. And the left AR virtual marked straight lane line 40 and the right AR virtual marked straight lane line 39 are displayed on the projection display screen 38 as the straight lane lines.

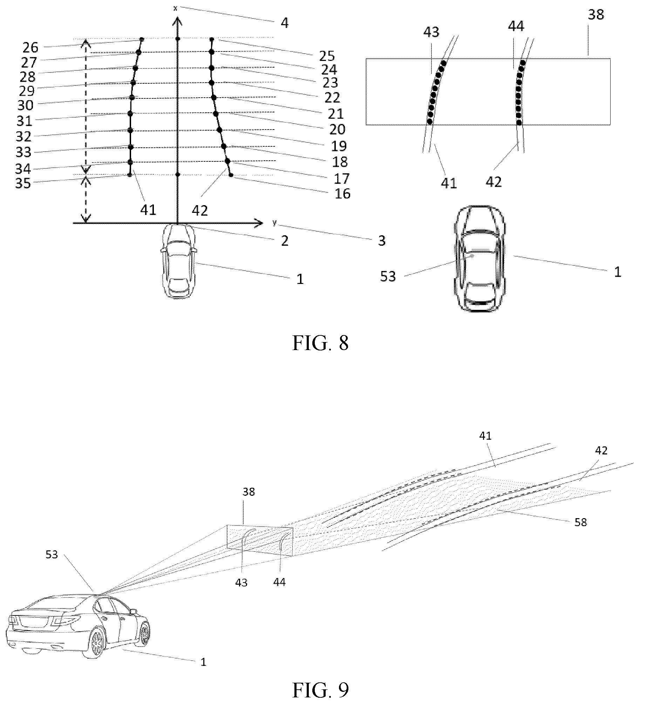

Referring to FIG. 8, FIG. 8 shows display of dot marking of a curved lane line provided by an embodiment of the present application. Therein, points 16-25 are 10 sampling points of a left curved lane line 42, and points 26-35 are 10 sampling points of a right curved lane line 41. Based on the coordinate equation transformation relationship, a left AR virtual marked curved lane line 44 displayed on the projection display screen 38 as the left curved lane line 42 may be determined. Based on the coordinate equation transformation relationship, right AR virtual marked straight lane line 43 displayed on the projection display screen 38 as the right curved lane line 41 may be determined. Specific display results may be referred to FIG. 9, which is a schematic diagram of an augmented display of curved lane markings provided by an embodiment of the present application. A coverage range of 58, the left curved lane line 41 and the right curved lane line 42 of the curved lane lines are displayed on the projection display screen 38. And the left AR virtual marked curved lane line 44 and the right AR virtual marked curved lane line 43 are displayed on the projection display screen 38 as the curved lane lines.

In the embodiment of the present application, when the target object is the lane line, fusion marking of the lane line may be ensured to be more accurate through dot marking.

Referring to FIG. 10, FIG. 10 is a flowchart of an augmented display method applied to lane line display and target vehicle display provided by an embodiment of the present application. The method may include the following steps.

S1101: receiving, by an AR-HUD controller, lane line coordinate information and target vehicle coordinate information sent by intelligent driving.

The method for acquiring the lane line coordinate information is shown in step S501 of FIG. 4, which will not be repeated herein again.

Target vehicle coordinates are coordinates of a target vehicle displayed in the first coordinate system. The first coordinate system is the first coordinate system shown in FIG. 3. Referring to FIG. 11, FIG. 11 is a schematic diagram of a fusion augmented display of lane line coordinate information and target vehicle information provided by an embodiment of the present application. As shown on the left side of FIG. 11, a specific display of the target vehicle coordinate information is shown. Therein, the target vehicle 45 coordinate information consists of x-coordinate 46 and y-coordinate 47.

S1102: constructing a coordinate equation transformation relationship between eyes of a main driver, a target display region, and a first coordinate system synchronously.

Specific construction steps are shown in FIG. 3, which will not be repeated again herein.

S1103: determining display of the lane line coordinate information and target vehicle coordinate information in the target display region.

According to step S503 in FIG. 4, the display of the lane line coordinate information is acquired. In an upper right image shown in FIG. 11, a left AR virtual marked straight lane line 40 is displayed on a projection display screen 38 as a left straight lane line 37. A right AR virtual marked straight lane line 39 is displayed on the projection display screen 38 as a right straight lane line 36. Based on the target vehicle coordinate information of the target vehicle 45 and the coordinate equation transformation relationship, the display information of the target vehicle 45 on projection display screen 38 may be acquired. Then virtual fusion display of the target vehicle is performed, based on the display information and an AR virtual fusion marker 48 of the target vehicle, by the projection display screen 38.

The present embodiment provides a flowchart of a method for performing augmented display of lane lines and target vehicles. Display augmentation may be preformed to the lane lines and target vehicles simultaneously, making it convenient for users to observe directly.

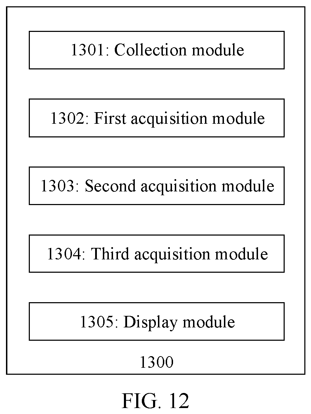

**In** addition, embodiments of the present application also provide an augmented display apparatus. Referring to FIG. 12, FIG. 12 is a schematic diagram of a structure of an augmented display apparatus provided by an embodiment of the present application. The apparatus 1300 includes: a collection module 1301, configured to collect reality information of a target object, where the reality information of the target object is intelligent driving information of a current vehicle; a first acquisition module 1302, configured to acquire a first coordinate system determined based on a preset position of the current vehicle; a second acquisition module 1303, configured to acquire, based on the first coordinate system and the reality information of the target object, first target object coordinate information of the target object; a third acquisition module 1304, configured to acquire, based on user eyes, a target display region, and the first coordinate system of the current vehicle, a coordinate equation transformation relationship; and a display module 1305, configured to determine, based on the first target object coordinate information and the coordinate equation transformation relationship, display information of the target object in the target display region, and perform augmented display of the display information.

Optionally, the first acquisition module 1302 is specifically configured to acquire the first coordinate system with the preset position of the current vehicle as a coordinate origin, a direction parallel to a horizontal plane and a speed direction of the current vehicle as a horizontal axis, and a direction parallel to the horizontal plane and perpendicular to the speed direction of the current vehicle as a longitudinal axis.

Optionally, the third acquisition module 1304 is specifically configured to acquire a second coordinate system based on the user eyes of the current vehicle with the user eyes of the current vehicle as a coordinate origin of the second coordinate system, an axis parallel to the horizontal plane and the speed direction of the current vehicle as a horizontal axis of the second coordinate system, and an axis parallel to the horizontal plane and perpendicular to the speed direction of the current vehicle as a longitudinal axis of the second coordinate system; determine, based on a position relationship between the user eyes of the current vehicle and the preset position of the current vehicle, a first coordinate equation transformation relationship between the second coordinate system and the first coordinate system; and acquire a second coordinate equation transformation relationship mapping coordinate information in the second coordinate system to the target display region; where the coordinate equation transformation relationship includes the first coordinate equation transformation relationship and the second coordinate equation transformation relationship.

Optionally, the display module 1305 is specifically configured to determine, based on the first target object coordinate information and the first coordinate equation transformation relationship, second target object coordinate information, where the second target object coordinate information is coordinate information of the target object in the second coordinate system; and determine, based on the second target object coordinate information and the second coordinate equation transformation relationship, the display information of the target object in the target display region.

Optionally, the target object includes lane lines, and starting and ending points of the lane lines collected by the current vehicle during intelligent driving. The apparatus may further include a marking module, configured to acquire part of the target display region performing augmented display of a fusion of the lane lines, mark a plurality of mark points in the part of the target display region of the lane lines and acquire first coordinate information of the plurality of mark points.

The display module is further configured to determine, based on the first coordinate information of the plurality of mark points, a display position of the target object in the target display region through the coordinate equation transformation relationship, and determine an angle between the target object and the horizontal plane.

Optionally, after the collecting reality information of a target object, the apparatus may further include a generation module, configured to generate an augmented-reality virtual fusion marker of the target display region and the target object, where
the display module 1305 is further configured to perform, based on the augmented-reality virtual fusion marker of the target object and the display information, augmented display of the display information.

The present application discloses an augmented display apparatus. Therein, the collection module 1301 is configured to collect reality information of a target object. The first acquisition module 1302 is configured to acquire a first coordinate system determined based on a preset position of a current vehicle. The second acquisition module 1303 is configured to acquire first target object coordinate information. The third acquisition module 1304 is configured to acquire coordinate equation transformation relationship between user eyes, a target display region, and the first coordinate system of the current vehicle. The display module 1305 is configured to determine display information of the first target object coordinate information in the target display region and perform augmented display. Thus, vehicle driving information and reality information collected by intelligent driving are fused, and augmented fusion display is performed in the target display region, so that a user can visually and efficiently perceive intelligent driving prompt information, thereby maximizing perception of the user on system safety.

The modules mentioned above can be implemented through the following processors.

The embodiment of the present application also provides a corresponding device and a computer-readable storage medium for implementing the solutions provided by the embodiments of the present application.

Therein, the device includes a memory and a processor. The memory is configured to store instructions or code, and the processor is configured to execute the instructions or code to enable the device to perform the augmented display method described in any embodiment of the present application.

In practical applications, the computer-readable storage medium may be any combination of one or more computer-readable medium. Computer-readable medium can be computer readable signal medium or computer readable storage medium. Computer readable storage medium may include but are not limited to electrical, magnetic, optical, electromagnetic, infrared, or semiconductor systems, devices, or any combination thereof. More specific examples (non exhaustive list) of the computer-readable storage medium may include: electrical connections with one or more wires, portable computer disks, hard drives, Random Access Memory (RAM), Read-Only Memory (ROM), erasable programmable read-only memory (EPROM or flash memory), fiber optics, portable compact disk read-only memory (CD-ROM), optical storage devices, magnetic storage devices, or any suitable combination thereof. In this embodiment, the computer-readable storage medium can be any tangible medium containing or storing a program that can be used by an instruction execution system, apparatus, or device, or used in combination with it.

A computer-readable signal medium may include data signals propagated in the baseband or as part of a carrier wave, carrying computer-readable program code. This propagated data signal can take various forms, including but not limited to electromagnetic signals, optical signals, or any suitable combination thereof. A computer readable signal medium can also be any computer-readable medium other than computer-readable storage medium, which can send, propagate, or transmit programs for use by or in combination with instruction execution systems, apparatus, or devices.

The program code contained on a computer-readable medium can be transmitted using any suitable medium, including but not limited to wireless, wire, fiber optic cable, RF, etc., or any suitable combination thereof.

The computer program code for performing the operations of the present invention can be written in one or more programming languages or combinations thereof. The programming language may include object-oriented programming languages such as Java, Smalltalk, and C+ +, and may also include conventional procedural programming languages such as "C" language or similar programming languages. Program code can be executed entirely on a user computer, partially on the user computer, as a standalone software package, partially on the user computer and partially on a remote computer, or entirely on a remote computer or server. In cases involving remote computers, the remote computer can be connected to the user computer through any type of network, including a local area network (LAN) or a wide area network (WAN), or can be connected to an external computer (such as using an internet service provider to connect via the internet).

It should also be noted that in this article, relational terms such as first and second are only used to distinguish one entity or operation from another, and do not necessarily require or imply any actual relationship or order between these entities or operations. Moreover, terms like "including", "containing", or any other variation thereof are intended to encompass non exclusive inclusion, such that a process, method, item, or device that includes a series of elements includes not only those elements, but also other elements not explicitly listed, or elements inherent to such process, method, item, or device. Without further limitations, the element defined by the statement "including one..." does not exclude the existence of other identical elements in the process, method, item, or device that includes the element.

## Claims

1. An augmented display method, comprising:
collecting (S201) reality information of a target object, wherein the reality information of the target object is intelligent driving information of a current vehicle;
acquiring (S202) a first coordinate system determined based on a preset position of the current vehicle;
acquiring (S203), based on the first coordinate system and the reality information of the target object, first target object coordinate information of the target object;
acquiring (S204), based on user eyes, a target display region, and the first coordinate system of the current vehicle, a coordinate equation transformation relationship; and
determining (S205), based on the first target object coordinate information and the coordinate equation transformation relationship, display information of the target object in the target display region, and performing augmented display of the display information.

2. The method according to claim 1, wherein the acquiring (S202) a first coordinate system comprises:
acquiring the first coordinate system with the preset position of the current vehicle as a coordinate origin, a direction parallel to a horizontal plane and a speed direction of the current vehicle as a horizontal axis, and a direction parallel to the horizontal plane and perpendicular to the speed direction of the current vehicle as a longitudinal axis.

3. The method according to claim 2, wherein the acquiring (S204), based on user eyes, a target display region, and the first coordinate system of the current vehicle, a coordinate equation transformation relationship comprises:
acquiring a second coordinate system based on the user eyes of the current vehicle with the user eyes of the current vehicle as a coordinate origin of the second coordinate system, an axis parallel to the horizontal plane and the speed direction of the current vehicle as a horizontal axis of the second coordinate system, and an axis parallel to the horizontal plane and perpendicular to the speed direction of the current vehicle as a longitudinal axis of the second coordinate system;
determining, based on a position relationship between the user eyes of the current vehicle and the preset position of the current vehicle, a first coordinate equation transformation relationship between the second coordinate system and the first coordinate system; and
acquiring a second coordinate equation transformation relationship mapping coordinate information in the second coordinate system to the target display region;
wherein the coordinate equation transformation relationship comprises the first coordinate equation transformation relationship and the second coordinate equation transformation relationship.

4. The method according to claim 3, wherein the determining (S205), based on the first target object coordinate information and the coordinate equation transformation relationship, display information of the target object in the target display region comprises:
determining, based on the first target object coordinate information and the first coordinate equation transformation relationship, second target object coordinate information, wherein the second target object coordinate information is coordinate information of the target object in the second coordinate system; and
determining, based on the second target object coordinate information and the second coordinate equation transformation relationship, the display information of the target object in the target display region.

5. The method according to claim 1, wherein the target object comprises lane lines collected by the current vehicle during intelligent driving, and starting and ending points of the lane lines, and the method further comprises:
determining, based on the lane lines and the starting and ending points, an augmented display region of the target display region, wherein the augmented display region is a region performing augmented display of a fusion of the lane lines and the starting and ending points;
marking a plurality of mark points in the augmented display region and acquiring first coordinate information of the plurality of mark points;
determining, based on the first coordinate information of the plurality of mark points, a display position of the target object in the target display region through the coordinate equation transformation relationship, and determining an angle between the target object and the horizontal plane.

6. The method according to claim 5, wherein the marking a plurality of mark points in the augmented display region comprises:
marking the plurality of mark points in the augmented display region through dot marking.

7. The method according to any one of claims 1 to 6, after the collecting (S201) reality information of a target object, further comprising:
generating an augmented-reality virtual fusion marker of the target display region and the target object; wherein
the performing augmented display of the display information comprises: performing, based on the augmented-reality virtual fusion marker of the target object and the display information, augmented display of the display information.

8. An augmented display apparatus, comprising:
a collection module (1301), configured to collect reality information of a target object, wherein the reality information of the target object is intelligent driving information of a current vehicle;
a first acquisition module (1302), configured to acquire a first coordinate system determined based on a preset position of the current vehicle;
a second acquisition module (1303), configured to acquire, based on the first coordinate system and the reality information of the target object, first target object coordinate information of the target object;
a third acquisition module (1304), configured to acquire, based on user eyes, a target display region, and the first coordinate system of the current vehicle, a coordinate equation transformation relationship; and
a display module (1305), configured to determine, based on the first target object coordinate information and the coordinate equation transformation relationship, display information of the target object in the target display region, and perform augmented display of the display information.

9. The apparatus according to claim 8, wherein the first acquisition module (1302) is configured to acquire the first coordinate system with the preset position of the current vehicle as a coordinate origin, a direction parallel to a horizontal plane and a speed direction of the current vehicle as a horizontal axis, and a direction parallel to the horizontal plane and perpendicular to the speed direction of the current vehicle as a longitudinal axis.

10. The apparatus according to claim 9, wherein
the third acquisition module (1304) is configured to acquire a second coordinate system based on the user eyes of the current vehicle with the user eyes of the current vehicle as a coordinate origin of the second coordinate system, an axis parallel to the horizontal plane and the speed direction of the current vehicle as a horizontal axis of the second coordinate system, and an axis parallel to the horizontal plane and perpendicular to the speed direction of the current vehicle as a longitudinal axis of the second coordinate system;
determine, based on a position relationship between the user eyes of the current vehicle and the preset position of the current vehicle, a first coordinate equation transformation relationship between the second coordinate system and the first coordinate system; and
acquire a second coordinate equation transformation relationship mapping coordinate information in the second coordinate system to the target display region;
wherein the coordinate equation transformation relationship comprises the first coordinate equation transformation relationship and the second coordinate equation transformation relationship.

11. The apparatus according to claim 10, wherein
the display module (1305) is configured to determine, based on the first target object coordinate information and the first coordinate equation transformation relationship, second target object coordinate information, wherein the second target object coordinate information is coordinate information of the target object in the second coordinate system; and
determine, based on the second target object coordinate information and the second coordinate equation transformation relationship, the display information of the target object in the target display region.

12. The apparatus according to claim 8, wherein
the target object comprises lane lines collected by the current vehicle during intelligent driving, and starting and ending points of the lane lines, and
the apparatus further comprises:
a marking module, configured to acquire part of the target display region performing augmented display of a fusion of the lane lines, mark a plurality of mark points in the part of the target display region of the lane lines and acquire first coordinate information of the plurality of mark points; and
the display module (1305) is further configured to determine, based on the first coordinate information of the plurality of mark points, a display position of the target object in the target display region through the coordinate equation transformation relationship, and determine an angle between the target object and the horizontal plane.

13. The apparatus according to any one of claims 8 to 12, after the collecting reality information of a target object, further comprising:
a generation module, configured to generate an augmented-reality virtual fusion marker of the target display region and the target object, wherein
the display module is further configured to perform, based on the augmented-reality virtual fusion marker of the target object and the display information, augmented display of the display information.

14. An electronic device, comprising:,
a memory and a processor, wherein the memory is coupled to the processor; and
program instructions are stored in the memory, and when the program instructions are executed by the processor, a method according to any one of claims 1 to 7 is implemented by the electronic device.

15. A computer-readable storage medium, wherein
an implementation program of an augmented display method is stored in the computer-readable storage medium for implementing steps of the augmented display method according to any one of claims 1 to 7 when the implementation program is executed by a processor.
